# EUROPEAN PATENT APPLICATION

(11) **EP 2 320 699 A1**
(43) Date of publication of application: **11.05.2011**
(21) Application number: 09290858.1
(22) Date of filing: 10.11.2009
(51) Int. Cl.: H04W 36/30

(54) **A Femtocell base station, and a method of triggering transfer of a radio connection with a user terminal from a macrocell base station to a femtocell base station**

(71) Applicant: Alcatel Lucent, 75008 Paris (FR)
(72) Inventor: Shahid, Malek, Chippenham, SM14 OTJ Witshire (GB); Fuente, Maria, SN14 OTJ, Wiltshire (GB); Claussen, Holger of Shournagh, Co. Kildare (IE); Samuel, Louis Gwyn of Ashdale, Dalkey, Dublin (IE)
(74) Representative: Sarup, David Alexander

(57) **Abstract**

A method is provided of triggering transfer of connection by radio with a user terminal from a macrocell base station to a femtocell base station. The method comprises: the femtocell base station sending a triggering signal to the user terminal at the carrier frequency of the macrocell, the user terminal reacting by seeking to transfer the connection to the femtocell base station.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications.

One known type of femtocell base station is a Universal Mobile Telecommunications System (UMTS) base station router.

Femtocell base stations are sometimes referred to as femtos.

One known problem of femtocell base stations is how enable a user terminal that is connected to the macrocell base station to transfer to connection with a femtocell base station, when the user terminal is in the femtocell, in particular where the femtocell base station uses a different carrier frequency than the macrocell base station.

A first known approach is to include the femtocell in a list of neighbour cells for possible handover to. The femtocell is identified in this list by the primary scrambling code that the femtocell uses. The list is stored in the macrocell base station. This approach has the drawback that a user terminal in the femtocell will likely remain connected to the macrocell base station whilst the user terminal is in idle mode and the signal from the macrocell base station remains of sufficiently good quality. This can happen even when the user terminal is in the building in which the femtocell base station is located.

A second approach is to define a hierarchical cell structure so as to then inform user terminals about a particular femtocell base station for possible cell reselection within the macrocell in which the user terminal is currently situated. This approach is not suitable for legacy user terminals which are not readily provided with such information.

A third approach is to provide the femtocell with a different Public Land Mobile Network(PLMN) identifier to that of the macrocell, and to configure the user terminals accordingly. Specifically, (Universal) Subscriber Identity Module, (u)SIM, of each user terminal is configured with the PLMN identifier of femto so as to enable the user terminal to use the PLMN indentifier of the femtocell base station in order to connect to the femtocell base station. This approach is laborious, and is unsuitable for some types of user terminals.

### Summary

The reader is referred to the appended independent claims. Some preferred features are laid out in the dependent claims.

An example of the present invention is a method of triggering transfer of connection by radio with a user terminal from a macrocell base station to a femtocell base station. The method comprises: the femtocell base station sending a triggering signal to the user terminal at the carrier frequency of the macrocell, the user terminal reacting by seeking to transfer the connection to the femtocell base station.

Some preferred embodiments enable user terminals to perform transfer of a radio connection, for example, cell reselection or handover, to the local femto. Some such embodiments enhance network capacity, and reduce the transmission powers required of user terminals and hence improves lifetimes of their batteries.

Preferably the triggering signal is sent by the femtocell base station in first portions of repeating timeslots, and the femtocell base station sends pilot signals in second portions of the repeating time slots, the first portions and second portions not overlapping in time. Preferably the triggering signals and pilot signals are generated by the femtocell base station having a single radio signal generator.

In some embodiments, a femto does not transmit upon detection that there is no user terminal in the femtocell. This reduces interference to the macrocell base station and other femtos.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 is a diagram illustrating one of the femtocell base stations shown in Figure 2,
Figure 4 is a series of three graphs of signal strength against time for each of the three cases: (A) no user terminal registered with the femto is in the femtocell, (B) user terminal, which is in idle mode and registered with the femto, is in the femtocell, and (C) user terminal, which is in connected mode and registered with the femto, is in the femtocell.

### Detailed Description

We now describe a network including femtocell base stations then look in greater detail at how to encourage or force a user terminal to transfer from the macrocell to a femtocell when it becomes appropriate to do so. This transfer is sometimes known as cell reselection, when the user terminal is in idle mode, and is sometimes known as handover or handoff when the user terminal is in active mode, i.e. call-connected.

### Network

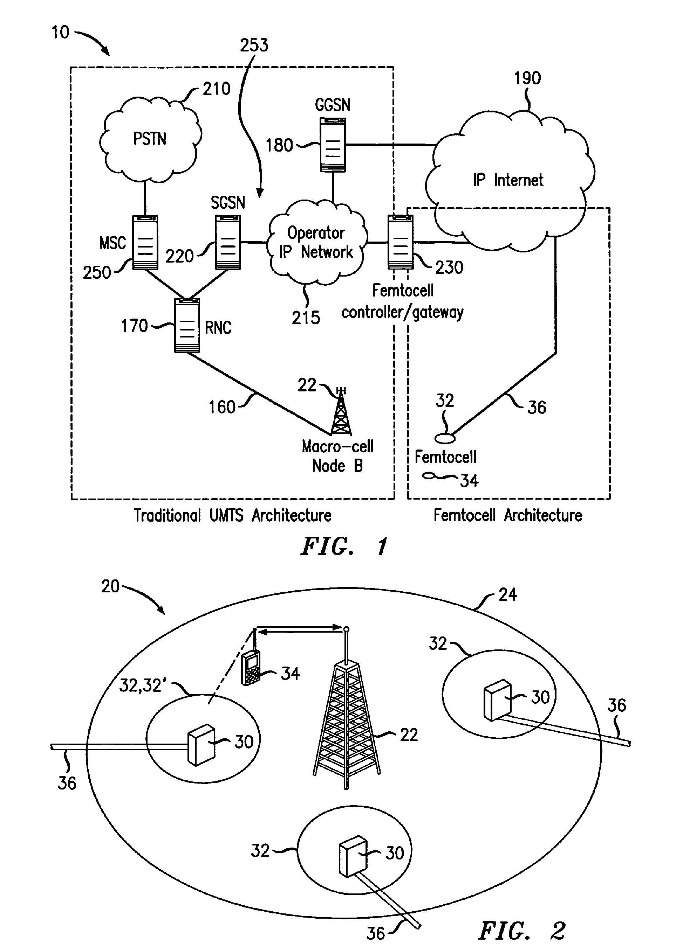

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with service general packet radio service support nodes (SGSNs) 220 and a gateway general packet radio support node (GGSN) 180. The GGSN then communicates with a packet-switch core 190 such as, for example, the Internet.

The MSC 250, SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 32. These connections to the femtocell controller/gateway 230 are broadband Internet Protocol connections ("backhaul") connections.

In Figure 2, three femtocell base stations 30 and corresponding femtocells 32 are shown for simplicity.

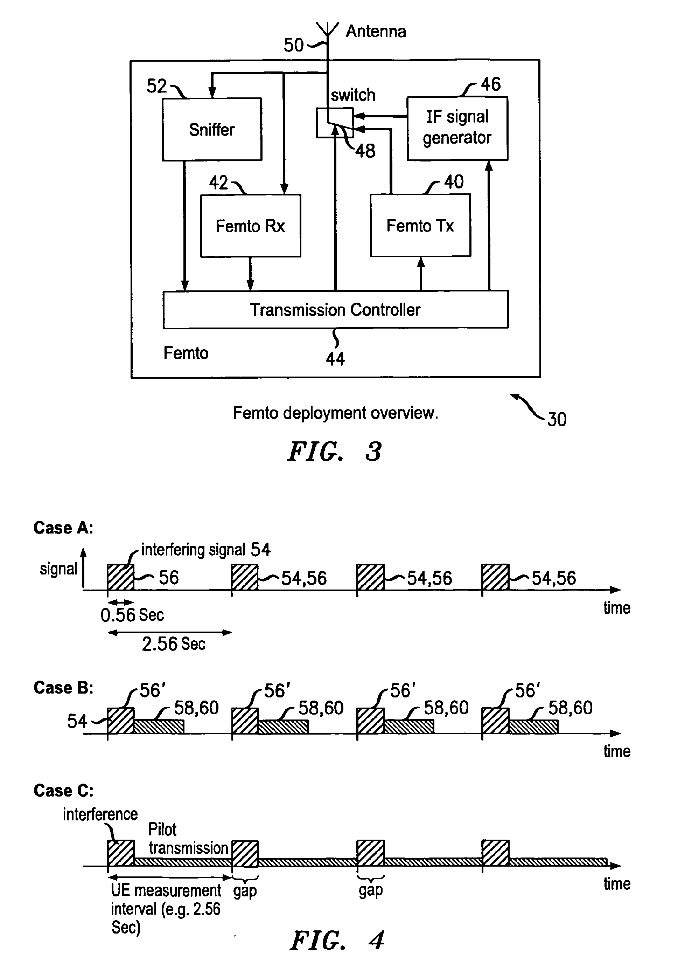

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to transfer the connection with the mobile terminal from the macrocell to the femtocell. In the example shown in Figure 3, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 2).

### Transfer to the femto cell base station

Transfer of a user terminal from connection with the macrocell to connection with the femtocell in which the user terminal becomes located is triggered by encouraging or forcing the user terminal connected to the macrocell to connect to another cell. Two main approaches are used as presented below. One involves generating a signal to interfere with the signal from the macrocell base station so as to trigger cell reselection. Another is send a macrocell-barring command to the user terminal causing the user terminal to select the femtocell instead.

### Making the signal quality from the macrocell go below an acceptability threshold

When the user terminal is within the femtocell, particularly when the macrocell and femtocell use different carrier frequencies and the signal quality of the macrocell is good, it is desirable to trigger the user terminal to start the cell reselection process. This is done by making the macrocell signal quality fall below a threshold.

The interfering signal to be applied is deduced from determining the carrier frequency and primary scrambling code of the macrocell, and the macrocell's Received Signal Strength Indicator (RSSI) which is related to signal-to-noise-ratio (denoted Ec/No). These are determined by the femtocell detecting signals from the macrocell, which is a process known as sniffing. The femtocell also has a record of similar measurements made by user terminals during their operation.

These measurements are used to calculate the signal-to-noise-ratios experienced by the user terminals, and hence provide a determination of the noise signal level (No) needed to artificially degrade the signal level (Ec) to an appropriate extent.

The interfering, artificial noise, signal from the femtocell base station is at the same parameter settings, such as carrier frequency and scrambling code, as used by the macrocell. The interfering signal causes the received quality of the signals from the macrocell, such as pilot signals, to deteriorate to the extent that cell reselection is caused to a different frequency amongst those used in the Public Land Mobile Network (PLMN). The frequencies used in the PLMN include the frequency of the femtocell.

Specifically, the Ec/No ratio is brought to below the threshold set by the network for an acceptable connection. Accordingly, the user terminal is driven to perform a so-called inter frequency cell search, in other words, seek another cell operating at a different carrier frequency to connect to instead.

In determining the level of interfering signal to apply, the femtocell takes account of the attenuation of signals that will occur within the femtocell, such as between the femtocell base station and a user terminal located at the edge of the femtocell.

This approach is described in more detail below.

### Femtocell base station

As shown in Figure 3, the femtocell base station 30 includes a transmitter 40 and a receiver 42, both of which are connected to a transmission controller 44. The controller 44 is connected to an interfering signal generator 46 which is connected via a switch 48 to an antenna 50. The switch 48 operates under the control of the transmission controller 44 to selectably connect to the antenna 50 either the interfering signal generator 46 or the transmitter 40. The antenna 50 is also connected both to the receiver 42 and to a sniffer 52. The sniffer is a circuit for detection of signals at the carrier frequency of the macrocell base station 22 in the macrocell coverage area 24 of which the femtocell base station 30 resides.

### Operation

The femtocells 30 in the network 20 are allocated a set of primary scrambling codes where each femtocell uses one. The femtocells are also provided with information about the macrocell in which the femtocell is located and other nearby macrocells, specifically parameter values which are different for each macrocell, such as scrambling codes and frequency bands.

As mentioned above, the femtocell base station includes a sniffer which measures signals from the macrocell base stations. The transmission controller 44 of the femtocell base station 30 acts to rank the macrocells based on its own measurements of received signal strength and based on combining measurements reported by various user terminals over time as to strength of signals received from macrocells. The femtocell base station then adjusts its interfering transmit signal at the parameter values of the macrocell, in other words the carrier frequency and scrambling code of the macrocell, such that the signal-to-noise-ratio at the edge of the femtocell is at the threshold at which the user terminal would be triggered to do an inter frequency search for a new cell to connect to.

As explained in more detail below, this interfering signal is sent in a portion of periodic time slots. When a user terminal is detected as being in the femtocell, the femtocell base station also sends a pilot signal in a least part of the remaining portion of the time slots. By the way, due to the interfering signal and pilot signals being sent at different times, in an alternative embodiment(not shown), the IF signal generator 46 is the same radio as the transmitter 40.

The femtocell base station is able to detect whether a user terminal in the femtocell is one that it is desirable to connect with, for example it is registered for possible connection or is one for which successful connection to the femtocell base station is prohibited. In the case of the macrocell connected user terminal being identified as prohibited from connection with the femtocell base station, the interfering signal is not generated, to avoid encouraging the user terminal to connect to the femtocell base station.

The duration and periodicity of the interfering signal bursts are selected to ensure that the user terminal experiences sufficient degradation in signal from the macrocell base station that inter frequency cell search occurs among those carrier frequencies available to that PLMN. For example, an interfering signal lasting 0.56 seconds in repeating timeslots of 2.56 seconds has been found to be sufficient to trigger the inter frequency cell search.

We now consider four scenarios:
(i) No user terminal is in the femtocell,
(ii) A user terminal is in the femtocell but is not one registered with the femtocell (denoted case A below),
(iii) A user terminal is in the femtocell that is in idle mode and is registered with the femtocell (denoted case B below), and
(iv) A user terminal registered with the femtocell base station is in the femtocell but is in call-connected mode with the macrocell base station, and there are other user terminals in call-connected mode connected to the femtocell (denoted case C below).

These four scenarios are considered in turn:

### No user terminal is in the femtocell

Upon the femtocell base station detecting that there are no user terminals in the femtocell, the femtocell ceases transmission for a predetermined time.

This is done by the femtocell base station keeping a record of which user terminals are connected to itself in idle mode based on location area update and routing area update signalling. Upon the femto detecting that there are no connected-mode user terminals that it is connected to, and after expiry of a timer, the femto polls the user terminals recorded as being in idle mode connection to itself to determine which are still within the femtocell. If any of these user terminals are still in the femtocell, then a response to the poll is received, otherwise the femto deduces that all user terminals have left the femtocell, and so switches off its transmitter 44 and interfering signal generator 46 for a predefined relatively long period. During this time, the femto keeps its receiver 42 and sniffer 52 active.

Upon the sniffer 52, which can be considered as having a network "listening" function, detecting a noise rise at the carrier frequency of the macrocell in the uplink direction, it is considered that a user terminal that is connected to the macrocell base stations has entered the femtocell. Dependent on the situation, see Figure 4 and associated text below, at least the interfering signal is restarted.

The three further scenarios (cases A,B,C) are now described with reference to Figure 4.

### (A) User terminal is in the femtocell but is not one registered with the femtocell

In this scenario, the femto switches off its transmitter 40 so as not to send its usual signals at its designated carrier frequency and scrambling code, but keeps it receiver 42 and sniffer 52 active.

Also, as shown in Figure 4 (Case A), the femto transmits the interfering signal 54 for bursts 56 of 0.56 seconds within the timeslots of 2.56 seconds. In this case the femto only transmits for approximately 20% of the time which is good both for power saving and to keep interference to nearby macrocells relatively low.

When there is a response from the user terminal, two possibilities occur. Either the user terminal's attempt to camp on the femto, i.e. connect to the femto whilst the user terminal is in idle mode, is successful in which case the situation becomes that of case B below. Alternatively, the attempt to camp on is unsuccessful, i.e. the user terminal is not allowed to camp on because the user terminal is not a registered user of the femto and hence it is not permitted to connect. In that latter case, the femto stops transmitting the interfering signal at the frequency and scrambling code of the macrocell, for a period. This is so as to avoid repeated further failing camp-on attempts, and to avoid deteriorating the ongoing call-connection if any between the user terminal and macrocell base station.

### (B) User terminal is in the femtocell, is in idle mode and is registered with the femtocell

As shown in Figure 4 (Case B), the femto transmits the interfering signal 54' for bursts 56' of 0.56 seconds within the timeslots of 2.56 seconds.

As there is a user terminal camped on the femto, the femto also transmit pilot signals 58 for bursts 60 during the timeslots after the interfering signal bursts 56'.

As shown in Fig. 4 (Case B) the timeslots may be such that the pilot signals are not sent for the whole timeslot duration in which case the power of the pilot signals is increased to compensate.

In the example shown in Figure 4 (Case B) the interfering signal and pilot signal are sent in different non-overlapping portions of the timeslot.

Such signals could alternatively be generated by an alternative femtocell base station having just one radio to generate both signals in place of the transmitter 40 and interfering signal generator 46.

### (C) User terminal registered with the femtocell base station is in the femtocell but is in call-connected mode connected to the macrocell base station, and there are other user terminals in call-connected mode connected to the femtocell

As shown in Figure 4 (Case C), the femto transmits the interfering signal 54" for bursts 56" of 0.56seconds within the timeslots of 2.56 seconds. This interfering signal triggers the user terminal which is now in the femtocell to handover the connected-mode active call connection to the femtocell base station.

As there is a user terminal camped on the femto, the femto also transmit pilot signals 58' for bursts 60' during the timeslots after the interfering signal bursts 56".

As shown in Figure 4 (Case C) the timeslots may be such that the pilot signals are not sent for the whole timeslot duration in which case the power of the pilot signals is increased to compensate.

In the example shown in Figure 4 (Case C) the interfering signal and pilot signal are sent in different non-overlapping portions of the timeslot, but so as to fill the timeslot duration.

Such signals could alternatively be generated by an alternative femtocell base station (not shown) having just one radio to generate both signals in place of the transmitter 40 and interfering signal generator 46.

### Another approach: Sending a macrocell-barring command to the user terminal

In another embodiment (not shown), another approach to trigger cell reselection is for the femtocell base station to transmit a signal at the carrier frequency of the macrocell that includes an instruction to the user terminal to bar connection with the macrocell. The signal uses the carrier frequency and scrambling code parameters of the macrocell.

In this embodiment, temporal transmission gaps are created in the timeslots used for normal transmissions from the femto, and the signal at the macrocell carrier frequency is sent in bursts in those gaps. This is known as discontinuous transmission. In some other embodiments, the femtocell base station is provided with multiple radios for supporting time-overlapping transmissions at different frequencies.

In this approach, the femtocells in the network are allocated a set of primary scrambling codes where each femtocell uses one. The femtocells are also provided with information about the macrocell in which the femtocell is located and other nearby macrocells, specifically parameter values which are different for each macrocell, such as scrambling codes and frequency bands.

The femtocell base station includes a sniffer which measures signals from the macrocell base stations. The transmission controller of the femtocell base station acts to rank the macrocells based on its own measurements of received signal strength and based on combining measurements reported by various user terminals over time as to strength of signals received from macrocells. The femtocell base station then adjusts its transmit signal at the parameter values of the macrocell, in other words the carrier frequency and scrambling code of the macrocell, to a level that enables a user terminal to decode that signal correctly. This signal level is sufficient to match that of the macrocell at the edge of the femtocell.

This signal is an access class barring signal that bars the macrocell to those user terminals that are in the femtocell. As explained in more detail below, this signal is sent in a portion of periodic time slots.

The femto also sends an SIB11 broadcast signal that includes information about the neighbouring cells and itself. The user terminal receives and decodes this broadcast signal and acts to select a new cell to connect to.

The femtocell base station is able to detect whether a user terminal in the femtocell is one that it is desirable to connect with, for example it is registered for possible connection or is one for which successful connection to the femtocell base station is prohibited. In the case of the macrocell connected user terminal being identified as the latter type of user terminal, the barring signal is not generated to avoid encouraging the user terminal to connect to the femtocell base station.

### General

The present invention may be embodied in other specific forms without departing from its essential characteristics. For example, femtocell base stations can use either a carrier frequency of the macrocell base station for pilot signals or a dedicated carrier frequency. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of triggering transfer of connection by radio with a user terminal from a macrocell base station to a femtocell base station, the method comprising:
the femtocell base station sending a triggering signal to the user terminal at the carrier frequency of the macrocell,
the user terminal reacting by seeking to transfer the connection to the femtocell base station.

2. A method according to claim 1, in which the triggering signal is an interfering signal acting to reduce the signal to noise ratio of signals received from the macrocell base station to below a threshold so as to trigger further selection by the user terminal of a base station to connect to.

3. A method according to claim 2, in which the level of the interfering signal is set such that a user terminal just inside the femtocell edge experiences just enough interference to degrade the signal to noise ratio to just below the threshold.

4. A method according to claim 1, in which the triggering signal is a command to the user terminal barring the user terminal from connection to the macrocell base station so triggering further selection by the user terminal of a base station to connect to.

5. A method according to any preceding claim in which the triggering signal is sent by the femtocell base station in first portions of repeating timeslots, and the femtocell base station sends pilot signals in second portions of the repeating time slots, the first portions and second portions not overlapping in time.

6. A method according to claim 5, in which the femtocell base station comprises a single radio signal generator, and the triggering signals and pilot signals are generated by said generator.

7. A method according to any preceding claim, in which information about the femtocell base station, to be used by the user terminal in seeking to connect to the femtocell base station, is sent in a broadcast signal from the femtocell.

8. A method according to any preceding claim, in which for a period in which it is determined that there are no user terminals connectable to the femtocell base station in the femtocell, the femtocell base station transmits no signals but receives on the uplink frequency of the macrocell so as to detect whether a user terminal connected to macrocell base station is entering the femtocell.

9. A femtocell base station comprising a transmitter and further comprising a generator of a trigger signal to trigger transfer of connection by radio with a user terminal from a macrocell base station to the femtocell base station, the femtocell including an antenna operative to send the trigger signal to the user terminal at the carrier frequency of the macrocell.

10. A femtocell base station according to claim 9, further comprising a controller operative to set the level of the trigger signal such that in use the trigger signal is an interfering signal to the signal from the macrocell base station bringing the signal to noise ratio of the signal from the base station received by the user terminal to below a threshold so as to trigger further selection by the user terminal of a base station to connect to.

11. A femtocell base station according to claim 9 or claim 10, in which upon the femtocell base station detecting that there are no user terminals in the femtocell, the femtocell base station ceases transmission for a given time.

12. A femtocell base station according to any of claims 9 to 11, in which upon a user terminal being detected in the femtocell, the trigger signal is sent.

13. A femtocell base station according to claim 12, in which the sending of the trigger signal is ceased upon the femtocell base station determining that the user terminal is not registered with the femtocell base station so is not permitted to successfully connect to the femtocell base station.

14. A femtocell base station according to any of claims 9 to 13, in which both the trigger signal and pilot signals are sent by the femtocell base station upon the femtocell base station determining that a user terminal registered with the femtocell base station is in the femtocell.

## Amended claims

### Amended claims in accordance with Rule 137(2) EPC.

**1.** A method of triggering transfer of connection by radio with a user terminal (34) from a macrocell base station (22) to a femtocell base station (30), the method comprising:
the femtocell base station sending a triggering signal (54) to the user terminal at the carrier frequency of the macrocell (24),
the user terminal reacting by seeking to transfer the connection to the femtocell base station, **characterised in that** the triggering signal is an interfering artificial noise signal (54) set at a level to reduce the signal to noise ratio of signals received from the macrocell base station to below a threshold so as to trigger further selection by the user terminal of a base station to connect to.

**2.** A method according to claim 1, in which the level of the interfering artificial noise signal (54) is set such that a user terminal just inside the femtocell edge experiences just enough interference to degrade the signal to noise ratio to just below the threshold.

**3.** A method according to any preceding claim in which the triggering signal is sent by the femtocell base station in first portions (56') of repeating timeslots, and the femtocell base station sends pilot signals (58) in second portions (60) of the repeating time slots, the first portions and second portions not overlapping in time.

**4.** A method according to claim 3, in which the femtocell base station comprises a single radio signal generator, and the triggering signals and pilot signals are generated by said generator.

**5.** A method according to any preceding claim, in which information about the femtocell base station, to be used by the user terminal in seeking to connect to the femtocell base station, is sent in a broadcast signal from the femtocell base station.

**6.** A method according to any preceding claim, in which for a period in which it is determined that there are no user terminals connectable to the femtocell base station (30) in the femtocell, the femtocell base station transmits no signals but receives on the uplink frequency of the macrocell so as to detect whether a user terminal connected to macrocell base station is entering the femtocell.

**7.** A femtocell base station comprising a transmitter (40) and further comprising a generator (46) of a trigger signal to trigger transfer of connection by radio with a user terminal from a macrocell base station (22) to the femtocell base station, the femtocell base station including an antenna (50) operative to send the trigger signal to the user terminal at the carrier frequency of the macrocell (24),
**characterised by** further comprising a controller (44) operative to set the level of the trigger signal which is an interfering artificial noise signal such that in use the trigger signal interferes with the signal from the macrocell base station (22) bringing the signal to noise ratio of the signal from the macrocell base station received by the user terminal to below a threshold so as to trigger further selection by the user terminal of a base station to connect to.

**8.** A femtocell base station according to claim 7, in which upon the femtocell base station (30) detecting that there are no user terminals in the femtocell, the femtocell base station ceases transmission for a given time.

**9.** A femtocell base station according to any of claim 7 or claim 8, in which upon a user terminal (34) being detected in the femtocell, the trigger signal is sent.

**10.** A femtocell base station according to claim 9, in which the sending of the trigger signal is ceased upon the femtocell base station determining that the user terminal is not registered with the femtocell base station so is not permitted to successfully connect to the femtocell base station.

**11.** A femtocell base station according to any of claims 7 to 10, in which both the trigger signal (56') and pilot signals (58) are sent by the femtocell base station upon the femtocell base station determining that a user terminal registered with the femtocell base station is in the femtocell.
